Europäisches Patentamt

European Patent Office

Office européen des brevets

(11) Numéro de publication: **0 349 038 B1**

## FASCICULE DE BREVET EUROPEEN

(45) Date de publication de fascicule du brevet: **18.05.94**  (51) Int. Cl.⁵: **G02B 6/12**

(21) Numéro de dépôt: **89201586.8**

(22) Date de dépôt: **19.06.89**

---

(54) Dispositif semiconducteur comprenant un guide de lumière intégré qui présente au moins une partie rectiligne et une partie courbe.

---

(30) Priorité: **24.06.88 FR 8808503**

(43) Date de publication de la demande:
**03.01.90 Bulletin 90/01**

(45) Mention de la délivrance du brevet:
**18.05.94 Bulletin 94/20**

(84) Etats contractants désignés:
**DE FR GB NL**

(56) Documents cités:

FREOUENZ, vol. 35, no. 9, septembre 1981,
pages 247-252, Berlin, DE; K.-H. TIETGEN:
"Probleme der Topographie integriert optischer Schaltungen"

IEE PROCEEDINGS SECTION A à I, vol. 132,
no. 2, partie J, avril 1985, pages 140-145, Old
Woking, Surrey, GB; P.C. KENDALL et al.:
"Rib waveguide curvature loss: the scalar
problem"

(73) Titulaire: **ALCATEL ALSTHOM RECHERCHE**
**Société Anonyme**
**Route de Nozay**
**91460 Marcoussis(FR)**

(72) Inventeur: **Autier, Philippe Société Civile**
**S.P.I.D.**
**209, rue de l'Université**
**F-75007 Paris(FR)**
Inventeur: **Erman, Marko Société Civile**
**S.P.I.D.**
**209, rue de l'Université**
**F-75007 Paris(FR)**
Inventeur: **Auger, Jean-Marc Société Civile**
**S.P.I.D.**
**209, rue de l'Université**
**F-75007 Paris(FR)**

(74) Mandataire: **Dalsace, Michel et al**
**c/o Sospi**
**14-16, rue de la Baume**
**F-75008 Paris (FR)**

---

Rank Xerox (UK) Business Services
(3.10/3.09/3.3.3)

APPLIED PHYSICS LETTERS, vol. 48, no. 2, 13 janvier 1986, pages 92-94, American Institute of Physics, New York, US; S.K. KOROTKY et al.: "Greatly reduced losses for small-radius bends in Ti:LiNbO3 waveguides"

ELECTRONICS LETTERS, vol. 23, no. 15, 16 juillet 1987, pages 797-798, Stevenage, Herts., GB; B. SCHÜPPERT: "Reduction of bend losses in Ti:LiNbO3 waveguides through MgO double diffusion"

## Description

L'invention concerne un dispositif semiconducteur comprenant un guide de lumière intégré, lequel présente au moins une partie rectiligne et une partie courbe, et des moyens pour obtenir le confinement de la lumière dans le guide dans la partie courbe, lesquels incluent au moins une rainure disposée le long de l'un des deux flancs du guide dans la région de la courbe, ladite rainure ayant une structure telle qu'elle présente une profondeur constante, que sa partie centrale suit exactement ledit flanc du guide dans la partie courbe, et que ses extrémités s'écartent dudit flanc du guide à l'entrée et à la sortie de la partie courbe.

L'invention concerne également un procédé de réalisation d'un tel dispositif.

L'invention trouve son application dans la réalisation de dispositifs optiques intégrés, comme par exemple des modulateurs Mach-Zehnder, ou des commutateurs optiques qui comprennent des guides de courbures différentes, chaque guide présentant successivement des parties rectilignes et des parties courbes.

Il est connu de la publication intitulée "Probleme der Topographie integrierter Optischer Schaltungen" par Karl-Heinz TIET GEN dans "Frequenz Vol. 35 (1981) Sept. N°9, Berlin- Deutschland" p.248, de réaliser des guides enterrés, présentant une partie courbe.

Le guide enterré est simplement constitué par un ruban d'indice supérieur à celui du substrat, ce ruban étant réalisé par implantation de titane dans le substrat en $LiNbO_3$, et il affleure de ce fait la surface supérieure plane de ce substrat. Un tel guide complètement enterré présente toujours beaucoup de pertes.

Pour diminuer les pertes par diffusion radiale dans la partie courbe du guide, ce document enseigne à former un sillon de profondeur constante par exemple par gravure, qui suit exactement le flanc du guide enterré de plus grand rayon de courbure et est de même hauteur que ce dernier. Ce sillon gravé permet d'augmenter le saut d'indice entre le guide et le milieu extérieur au guide du côté du flanc du guide de plus grand rayon de courbure.

Par cette méthode selon le document cité, on peut atteindre des rayons de courbure de l'ordre de 0,5 mm, avec des pertes n'excédant pas 3dB.

Ce document enseigne aussi que l'on se trouve confronté dans la réalisation de tels guides courbes à des pertes causées par la diffusion due à la rugosité des flancs du guide vis-à-vis du milieu externe et que ces pertes sont d'autant plus grandes que le saut d'indice est plus grand ; et qu'il faut encore compter avec d'autres problèmes liés à ce saut d'indice, s'il est important, tels que la réflexion, le rayonnement et la conversion du mode.

C'est pour diminuer ces inconvénients que le sillon gravé présente, à l'entrée et à la sortie du virage ou partie courbe du guide, des extrémités qui s'ecartent du flanc du guide, de manière telle que le guide enterré n'est confiné latéralement, uniquement par le substrat d'indice inférieur, que dans les parties rectilignes, au-delà des extremités du sillon gravé.

Les pertes optiques par radiation dans les guides courbes ont d'autre part aussi été étudiées et décrites dans la publication de "MARCATILI et MILLER" dans "Bell Syst, Techn. 48, 2161 (1969)".

Lorsqu'une onde optique aborde la partie courbe d'un guide de lumière, cette onde doit s'adapter. A cet effet, une partie de l'énergie véhiculée est alors convertie en modes radiatifs. L'énergie rayonne alors d'une manière dispersive parallèlement au plan de guidage.

Ces pertes par radiation sont une conséquence du fait que, pour conserver la même vitesse de phase dans la région courbe, à l'extérieur du virage, le champ électromagné tique devrait se déplacer à une vitesse supérieure à la vitesse de la lumière dans le milieu. En effet, pour que le front d'onde soit préservé et se déplace suivant des plans d'onde à une vitesse angulaire constante, il est nécessaire que la vitesse de phase tangentielle soit proportionnelle à la distance qui sépare le point considéré, du centre de courbure du guide. Il existe une certaine distance D repérée à partir du bord extérieur du ruban constituant le guide d'onde, au-delà de laquelle la vitesse de propagation se trouve inférieure à la vitesse de phase nécessaire pour préserver le front d'onde. Par conséquent, à partir de cette distance, le mode ne peut plus se propager et la lumière subit une radiation dans le substrat situé dans la convexité de la courbe.

La conversion du mode guidé en mode de radiation est très pénalisante pour les guides monomodes lorsqu'ils présentent des rayons de courbures de longueur insuffisante.

Une formule établie par MARCATILI et publiée par T.TAMIR dans "Topics in Applied Physics - Volume 7" sous le titre Integrated Optics" p.133, donne le rayon de courbure R critique en fonction du confinement latéral D du mode, ou plus précisément en fonction de l'extension latérale des ondes évanescentes, et aussi en fonction de la longueur d'onde λ utilisée.

Les pertes radiatives ne sont plus négligeables lorque le rayon de courbure du guide satisfait à l'inégalité suivante :

$$r < 24\pi^2 \, D^3/ \, \lambda^2$$

D'après cette formule, plus le confinement latéral est important, plus le guide peut présenter un petit rayon de courbure sans augmenter les pertes qui ont lieu vers l'extérieur de la courbure.

Pour des guides monomodes, on déduit de cette formule que le rayon critique est de l'ordre de 10 mm. Il en résulte que pour des rayons de courbure inférieurs à 20 mm les pertes par radiation commencent à devenir importantes.

D'après cette formule, on tire l'enseignement qu'il est nécessaire d'augmenter le confinement latéral au niveau de la partie courbe des guides, ce qui est parfaitement conforme à l'enseignement du premier document cité.

Mais selon le premier document cité au titre d'état de la technique, ce problème est difficile à résoudre pour les guides monomodes du fait que les pertes par diffusion et le taux de conversion de modes augmentent en même temps que la différence d'indice avec le milieu de confinement.

Ainsi, les problèmes restent posés de réaliser des guides de lumière intégrés, présentant des parties courbes de beaucoup plus petits rayons de courbure que dans les publications citées, typiquement 500 $\mu$m, et présentant de très faibles pertes aussi bien dans les parties courbes que dans les parties rectilignes, notamment inférieures à 1 dB/cm.

Ces problèmes sont résolus par les moyens de l'invention qui permettent d'obtenir un confinement des parties courbes des guides tel qu'il supprime les pertes radiatives sans pour autant augmenter les pertes par diffusion ou conversion de mode, moyens qui s'appliquent en outre à une structure de guide à ruban qui présente beaucoup moins de pertes, en soi, que la structure de guide complètement enterrée connue de l'état de la technique.

Selon l'invention ce but est atteint au moyen d'un dispositif intégré muni des éléments constitutifs du préambule de la revendication 1 en combinaison avec les éléments constitutifs de la partie caractérisante de cette revendication 1, ainsi caractérisé en ce que ledit guide intégré a une structure consistant en une couche guidante et, surplombant la couche guidante, en un ruban en relief pour déterminer le chemin optique suivi par la lumière dans la couche guidante, et en ce que la structure de rainure est en outre telle que :

- sa partie centrale suit exactement le flanc du ruban de guidage dans la partie courbe,
- ses extrémités s'écartent du flanc de ce ruban à l'entrée et à la sortie de la partie courbe, et
- son fond est disposé dans la couche guidante à un niveau qui n'atteint pas la partie inférieure de cette couche guidante.

L'invention sera mieux comprise au moyen de la description suivante illustrée par les figures annexées dont :

- la figure 1a qui montre la forme de l'onde dans un guide courbe monomode,
- la figure 1b qui montre, vu du dessus la trace d'un faisceau lumineux dans un guide courbe non muni des moyens de confinement selon l'invention,
- la figure 1c qui montre, vu du dessus la trace d'un faisceau lumineux dans un guide courbe muni des moyens de confinement selon l'invention,
- la figure 2 qui montre ces moyens de confinement de la lumière dans un guide courbe selon l'invention,
- la figure 3 qui montre la partie $P_2$ de la figure 2, en perspective dans un premier mode de réalisation,
- la figure 4 qui montre la partie $P_1$ de la figure 2, en perspective dans ce même mode de réalisation,
- les figures 5a à 5c qui sont des coupes transversales schématiques de la partie $P_1$ de la figure 4 selon des plans différents,
- la figure 6 qui montre la partie $P_1$ de la figure 2, en perspective dans un autre mode de réalisation,
- les figures 7a à 7c qui sont des coupes transversales schématiques de la partie $P_1$ de la figure 6, selon des plans différents,
- les figures 8 qui montrent deux dispositions relatives possibles des masques, pour mettre en oeuvre le procédé de réalisation,
- les figures 9 qui illustrent la première étape du procédé de réalisation dans deux exemples de réalisation décrits,
- les figures 10 qui illustrent la seconde et la troisième étape du procédé de réalisation dans le premier exemple de réalisation décrit,
- les figures 11 qui illustrent la seconde et la troisième étape du procédé de réalisation dans le second exemple de réalisation décrit.

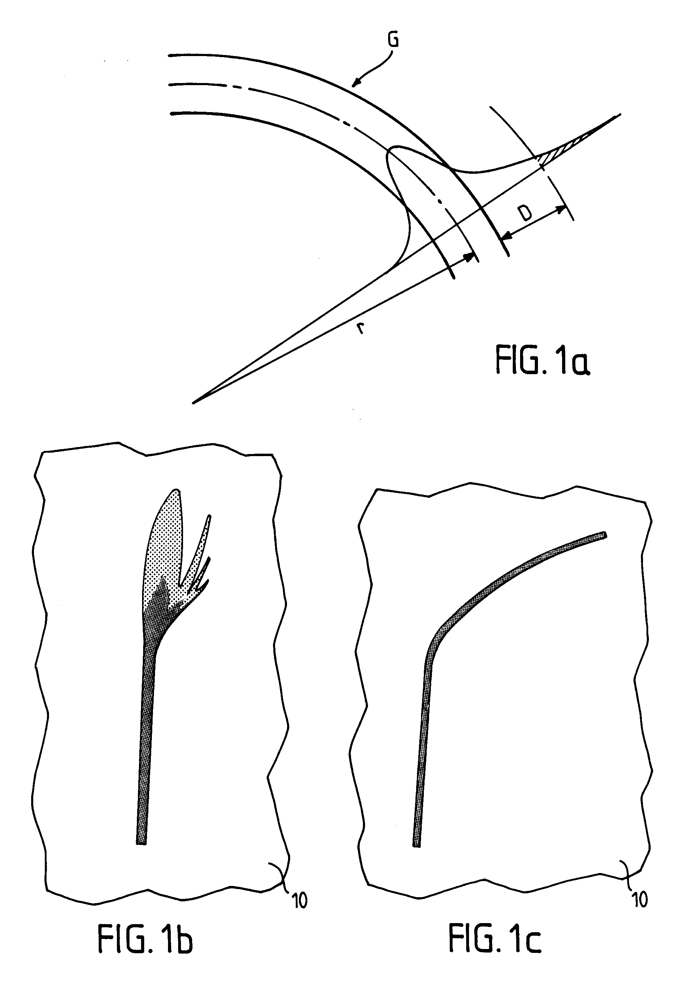

La figure 1a illustre le fait que dans un guide de lumière courbe G, de rayon de courbure r, il existe une certaine distance D, repérée à partir du bord externe convexe du guide, au-delà de laquelle la vitesse de propagation est inférieure à la vitesse de phase nécessaire pour préserver le front d'onde (Région hachurée). Par conséquent, à partir de cette distance D la lumière subit une radiation dans le substrat comme il est montré vu du dessus, par le relevé de la trace lumineuse, sur la figure 1b. On constate à la vue de la figure 1b que pratiquement toute l'énergie du mode guidé est perdue par radiation dans le substrat.

Cependant, si l'on applique l'enseignement de l'état de la technique, qui consiste à réaliser un sillon gravé appliqué le long du flanc du guide dans la partie convexe, alors il apparait un autre problème consistant dans le fait que le guide devient multimode d'un point de vue transverse, la différence d'indice effectif entre la région de guidage et la région adjacente de confinement ne devant pas excéder quelques $10^{-2}$. De plus, on introduit des pertes par dispersion due à la diffraction produite par la rugosité latérale.

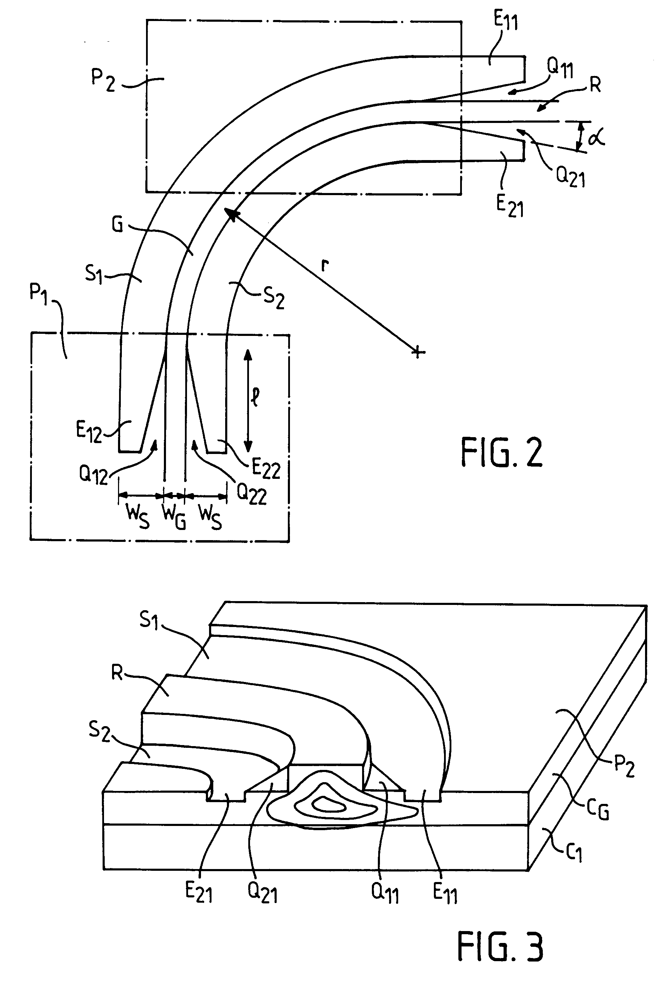

Selon l'invention, ces problèmes sont résolus par le dispositif montré vu du dessus sur la figure 2.

Ce dispositif comprend un guide de lumière G délimité en surface par le ruban R, qui présente au moins une partie courbe de rayon de courbure moyen r, et des parties rectilignes. Ce dispositif comprend en outre des moyens pour maintenir le trajet de l'onde lumineuse dans le guide G.

Ces moyens incluent deux sillons $S_1$ et $S_2$ pratiqués le long des flancs du guide dans la partie courbe de ce dernier. Selon l'invention, ces sillons sont de profondeur constante par rapport à la face supérieure du dispositif, ou par rapport à un autre plan de référence, par exemple le substrat. Ils présentent une dimension transversale constante $W_S$ dans la partie courbe du guide, mais leurs extrémités respectivement $E_{11}$, $E_{12}$ pour $S_1$ et $E_{21}$, $E_{22}$ pour $S_2$, présente une dimension transversale qui diminue de plus en plus lorsque l'on approche de l'extrémité du sillon ; si bien que, les flancs extérieurs des sillons restant parallèles aux flancs du guide, les flancs des sillons les plus proches des flancs du guide se séparent de ces derniers pour laisser entre eux une bande $Q_1$, $Q_2$ formant un coin d'angle $\alpha$. Les extrémités $E_{11}$, $E_{12}$, $E_{21}$, $E_{22}$ s'allongent sur une longueur $\ell$ de part et d'autre de la sortie de la partie courbe du guide.

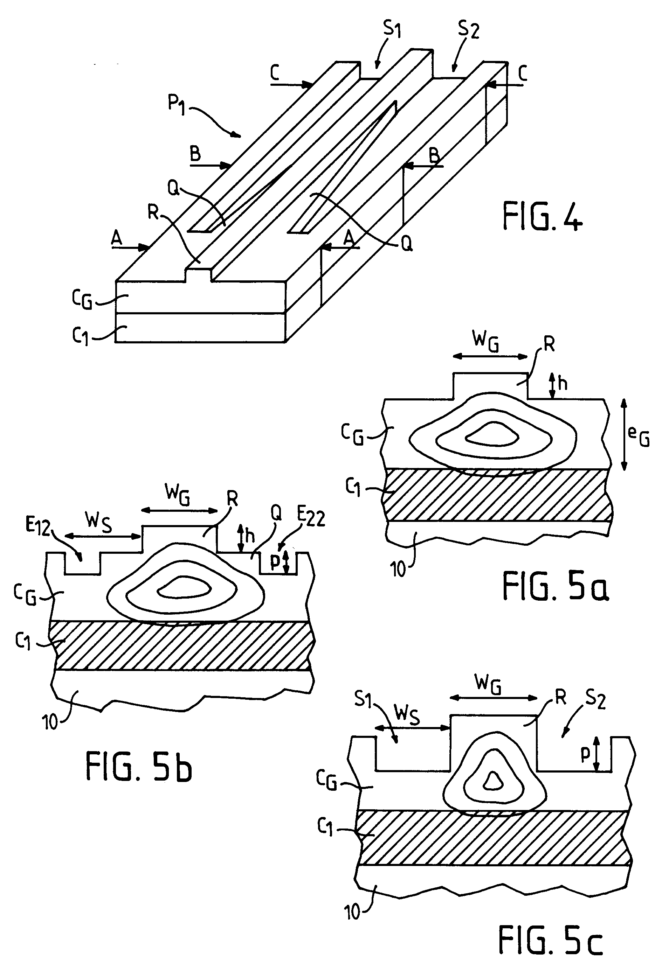

Ces moyens incluent aussi le fait que, comme il est montré en perspective sur les figures 3 et 4, ou en coupe sur les figures 5a, 5b, 5c, le guide de lumière est constitué d'au moins deux couches $C_1$ et $C_G$ surmontées d'un ruban R en relief sur la dernière couche.

La couche $C_1$ est une couche de confinement, de plus faible indice de réfraction que la couche $C_G$ qui la recouvre. La couche $C_G$ est la couche guidante, c'est-à-dire celle dans laquelle se propage l'onde. Le ruban R réalisé en surface de la couche guidante délimite le chemin optique suivi par l'onde dans la couche guidante.

Ce ruban R est favorablement d'une dimension transversale $W_G$ plus grande que la hauteur h dont il est érigé au-dessus du dispositif.

Dans ces conditions, la conversion de mode peut être évitée par deux moyens qui coopèrent : d'une part, du fait que les sillons s'écartent d'un angle $\alpha$ de la région guidée dès que le guide devient rectiligne. D'autre part du fait que, les sillons ne sont pas creusés sur toute l'épaisseur de la couche guidante, mais seulement sur une partie p qui ne dépasse pas, en général, 20 % de l'épaisseur $e_G$ de la couche guidante $C_G$.

Cette proportion est calculée en fonction de la longueur d'onde véhiculée, ainsi que des indices des matériaux pour obtenir à la fois le confinement du faisceau dans la partie courbe du guide, et éviter les conversions de mode.

Donc à l'aide des moyens de l'invention, à savoir :
- une couche guidante surmontée d'un mince ruban de guidage montrant une partie courbe,
- des sillons creusés contre les flancs du ruban de guidage dans la partie courbe,
- qui s'en écartent d'un angle $\alpha$ dès les sorties de courbe,
- qui sont creusés sur une profondeur inférieure à l'épaisseur de la couche guidante,

a) le faisceau présente de très faibles pertes dans les parties rectilignes du fait qu'il n'y a pas de diffusion latérale,

b) en même temps ce faisceau peut être facilement couplé latéralement avec un autre faisceau dont l'onde se propage dans la même couche guidante,

c) le faisceau présente de très faibles pertes dans la partie courbe, le rayon de courbure peut être extrêmement petit, de l'ordre de 50 $\mu$m,

d) comme le sillon n'atteint pas la base de la couche guidante toute conversion de mode peut être évitée,

e) comme la profondeur du sillon est relativement faible, les pertes dues à la diffusion latérale par diffraction sur les parois sont très faibles.

Ainsi un dispositif doté des moyens de l'invention est particulièrement performant.

**Exemple I** : les figures 3, 4 et 5 illustrent un mode de réalisation d'un dispositif à guide d'onde intégré muni des moyens de l'invention.

La structure de guide est une homostructure qui peut être formée par exemple sur un substrat en InP semi-isolant 10, d'une couche de confinement $C_1$ de faible indice en InP de type n$^+$, surmontée d'une couche guidante $C_G$ en InP de type n$^-$, et d'un mince ruban R du même matériau.

D'autres matériaux binaires du groupe III-V du même type de conductivité et de résistivité différente peuvent aussi convenir pour réaliser l'homostructure précédente.

La structure globale du dispositif est celle de la figure 2 vue du dessus. La partie $P_2$ de cette figure 2 est représentée en détail en perspective sur la figure 3. Cette figure montre le ruban de guidage R en relief sur la couche guidante $C_G$, laquelle est étendue sur la couche de confinement $C_1$ et sur le substrat 10. De part et d'autre du ruban R, et en coïncidence avec ses flancs, sont disposés les

sillons $S_1$ et $S_2$, dont le fond n'atteint pas la partie inférieure de la couche guidante $C_G$. Dès la sortie de la partie courbe, les sillons $S_1$ et $S_2$ s'écartent des flancs du ruban R pour laisser apparaître les coins $Q_{21}$ et $Q_{11}$ en matériau de la couche guidante $C_G$. Les sillons $S_1$ et $S_2$ dans ces parties $E_{21}$ et $E_{11}$, ont alors une dimension transverse plus faible que dans la région de la courbe.

La partie $P_1$ du dispositif de la figure 2 est représentée en détail en perspective sur la figure 4. On reconnaît les mêmes éléments que sur la figure 3 précédente.

Pour une meilleure compréhension du phénomène de propagation de l'onde dans la couche guidante, les figures 5a à 5c représentent des coupes du dispositif représenté figure 4, respectivement selon les plans AA, BB, CC.

La figure 5a correspond à la coupe AA par un plan perpendiculaire au guide dans une partie rectiligne.

Aucun sillon n'est creusé dans cette région. La couche $C_G$ présente une épaisseur $e_G$. Le ruban R présente une dimension traversale $W_G$ et est érigé d'une hauteur $\underline{h}$. La couche de confinement présente un indice de réfraction $n_1$ inférieur à l'indice $n_G$ de la couche guidante.

La figure 5c correspond à la coupe CC par un plan perpendiculaire au guide, à l'amorce de la région courbe. Les sillons $S_1$ et $S_2$ sont gravés par prolongement des flancs du ruban de guidage R. La profondeur des sillons $S_1$, $S_2$ par rapport au niveau supérieur de la couche guidante est p. La largeur des sillons de part et d'autre de R est $W_S$.

On constate que, bien que les sillons ne soient pas gravés sur toute l'épaisseur de la couche guidante, cette gravure est suffisante pour provoquer la compression adiabatique du faisceau, dont la section prend alors la forme montrée par les courbes iso-énergie sur cette coupe de la Fig. 5c.

La figure 5b correspond à la coupe BB par un plan perpendiculaire au guide, dans une région intermédiaire à la coupe AA et à la coupe CC.

Les parties $E_{12}$ et $E_{22}$ des sillons $S_1$ et $S_2$ montrent la compression du faisceau pour faire passer sa section de la forme montrée par les iso-énergie de la figure 5a, à la forme montrée par les isoénergies de la figure 5c.

On notera que la profondeur p gravée des parties $E_{12}$, $E_{22}$ est la même que celle des sillons $S_1$, $S_2$. La longueur des parties $E_{12}$, $E_{22}$, $E_{11}$, $E_{21}$ est $\ell$.

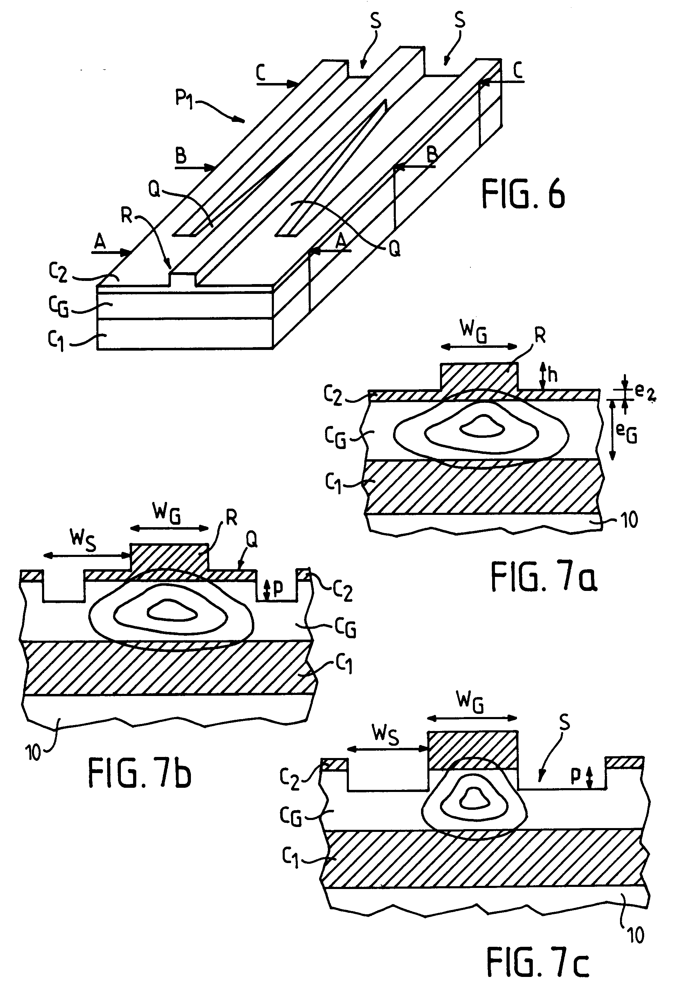

**Exemple II** : les figures 6 et 7 illustrent un second mode de réalisation de l'invention.

La structure de guide est une hétérostructure qui peut être formée par exemple, sur un substrat en InP semi-isolant 10, d'une couche de confinement $C_1$ de faible indice en InP, puis d'une couche guidante en GaInAsP d'indice légèrement supérieur, puis d'une nouvelle couche de confinement $C_2$ en InP en surface de laquelle est formé le mince ruban de guidage R du même matériau.

D'autres matériaux III-V peuvent être utilisés pour réaliser cette double hétérostructure. Par exemple un substrat et des couches de confinement en un matériau binaire, et une couche guidante en un matériau ternaire ou quaternaire d'indice requis, et de largeur de bande interdite appropriée pour être transparent au rayonnement utilisé.

La figure 6 est une vue en perspective de la partie $P_1$ de la figure 2.

Les figures 7a à 7c sont des coupes selon AA, BB, CC respectivement de la Figure 6.

La seconde couche de confinement $C_2$, d'épaisseur $e_2$ très faible présente une légère amélioration des performances par rapport au dispositif de l'exemple I, à mettre en balance avec une étape technologique supplémentaire pour la réalisation de cette couche.

Le reste du dispositif est substantiellement le même que celui de l'exemple I.

On propose ci-dessous en outre un procédé de réalisation avantageux pour mettre en oeuvre l'invention. En effet, comme le but visé par l'invention est l'intégration de dispositifs incluant des guides d'onde, dans un matériau semi-conducteur, avec de hautes performances et notamment de très faibles pertes dans une courbe de très petit rayon de courbure, le procédé de réalisation doit être particulièrement étudié à cet effet tout en permettant la réalisation du dispositif en synergie avec la réalisation d'autres éléments intégrés.

Procédé de réalisation

Le procédé de réalisation selon l'invention comprendra donc, d'une part la formation d'un guide externe de lumière enterré, à ruban de guidage, montrant au moins une partie courbe, à petit rayon de courbure, et d'autre part la formation de sillons de confinement de la lumière pour maintenir le guidage suivant l'axe du ruban, dans la partie courbe.

Ce procédé sera mise en oeuvre en trois étapes successives, nécessitant respectivement pour les deux dernières, deux masques de nature différente, c'est-à-dire en matériaux différents permettant des gravures sélectives.

A/ Première étape

Dans la première étape, on élaborera la structure de couches superposées à partir desquelles seront réalisés les dispositifs selon l'invention, c'est-à-dire une structure comportant au moins une couche de faible indice surmontée d'une couche d'indice légèrement plus élevé et comportant éventuellement une couche supérieure d'indice plus faible (voir les figures 9a à 9c).

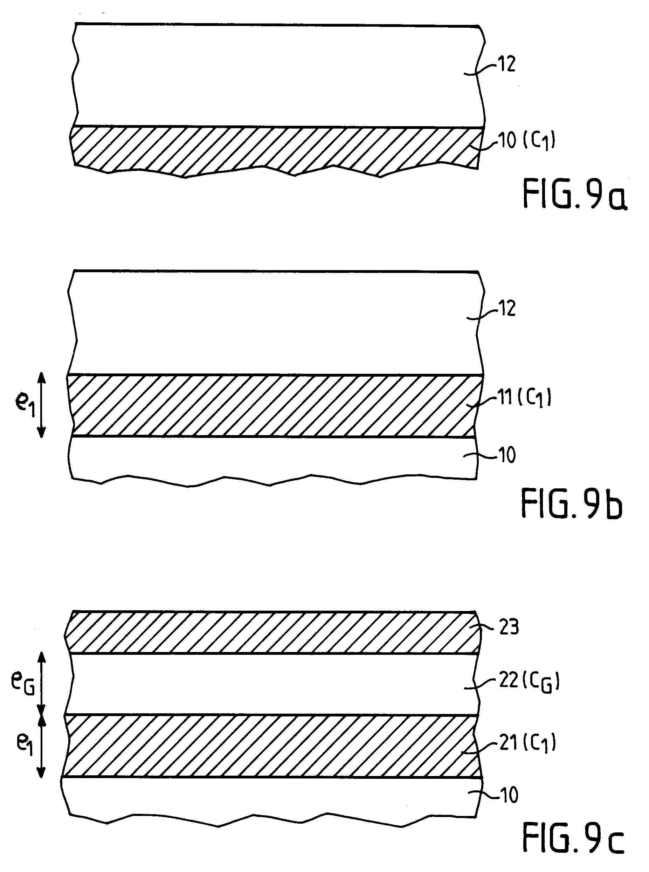

Ainsi pour réaliser l'homostructure de l'exemple I, on réalise d'abord le substrat 10 par tronçonnage d'une plaquette à partir d'un lingot massif d'InP semi-isolant obtenu par tirage Czochralski sous encapsulation liquide par exemple (voir la figure 9b).

Puis, par une méthode d'épitaxie telle que MOVPE ou VPE, on élabore une couche 11 d'InP de type $n^+$, obtenu par exemple par dopage à l'aide d'ions $S^+$ à une concentration d'environ $4.10^{18}$ par $cm^3$, couverte d'une couche 12 d'InP de type $n^-$ obtenu sans dopage intentionnel (voir la figure 9b).

L épaisseur de la couche 11 n'est pas critique. Elle peut être par exemple de $e_1$ = $3 \mu m$. La couche 11 sera utilisée comme couche de confinement $C_1$. L'épaisseur de la couche 12 est favorablement de $3 \mu m$. En effet, cette couche 12, qui par son type de conductivité $n^-$ présente un indice de réfraction légèrement supérieur à celui de la couche 11, servira à l'élaboration de la couche guidante $C_G$ d'épaisseur $e_G$ et du ruban R d'épaisseur h. A partir d'une couche 12 d'épaisseur $3 \mu m$, on obtiendra par le procédé selon l'invention, une couche guidante $C_G$ d'épaisseur :

$$e_G = 2,5 \mu m$$

et un ruban de hauteur $h \simeq 0,5 \mu m$

D'une manière générale, on cherchera à obtenir :

$$1,5 < e_G < 2,5 \mu m$$
$$0,5 < h < 0,75 \mu m \text{ et } W_G \simeq 4 \mu m$$

à partir d'une couche 12 d'épaisseur comprise entre 2 et $3 \mu m$.

Dans cette réalisation, le matériau InP-$n^-$ est transparent aux rayonnements de longueurs d'onde $\lambda$ = $1,3 \mu m$ et $\lambda$ = $1,55 \mu m$.

Dans une variante de l'homostructure de l'exemple I on réalise le substrat 10 de type de conductivité $n^+$. Il servira alors au confinement de la lumière, si l'on réalise directement à sa surface une couche épitaxiale 12 de type de conductivité $n^-$ comme il a été décrit précédemment (voir la figure 9a).

Pour réaliser la double hétérostructure de l'exemple II on réalise d'abord un substrat 10 par une méthode iden tique à celle employée dans l'exemple I.

Puis, toujours par épitaxie du type MOVPE ou VPE, on élabore une couche 21 d'InP sans dopage intentionnel destinée à constituer la couche de confinement $C_1$, dont l'épaisseur n'est pas critique et peut être de l'ordre de $e_1$ = $3 \mu m$.

En surface de la couche 21, on élabore ensuite une couche épitaxiale 22 de GaInAsP. L'épaisseur de la couche 22 est favorablement comprise entre 1,5 et $2,5 \mu m$ (voir la figure 9c).

En effet, cette couche quaternaire 22 sera utilisée comme couche guidante $C_G$ d'épaisseur $e_G$.

Dans cette réalisation, le matériau quaternaire GaInAsP est transparent au rayonnement de longueur d'onde $\lambda$ = $1,3 \mu m$ ou $\lambda$ = $1,55 \mu m$ utilisés actuellement en télécommunications.

En surface de la couche quaternaire 22, on élabore enfin une nouvelle couche 23 binaire d'InP, dont l'épaisseur sera favorablement de $1 \mu m$. C'est dans cette couche 23 que sera élaboré le ruban R de hauteur $h \simeq 0,5 \mu m$ et largeur $W_G \simeq 4 \mu m$ identiquement à l'exemple I. L'épaisseur restante de la couche 23 en surface de la couche 22 sera alors $e_3$ comprise entre 0,25 et $0,5 \mu m$ selon la hauteur h (voir la figure 9c,) ($0,5 < h < 0,75 \mu m$).

La différence d'indice entre le matériau binaire (de plus faible indice) et le matériau quaternaire permet le confinement de la lumière dans la couche $C_G$ 22.

B/ <u>Seconde étape</u>

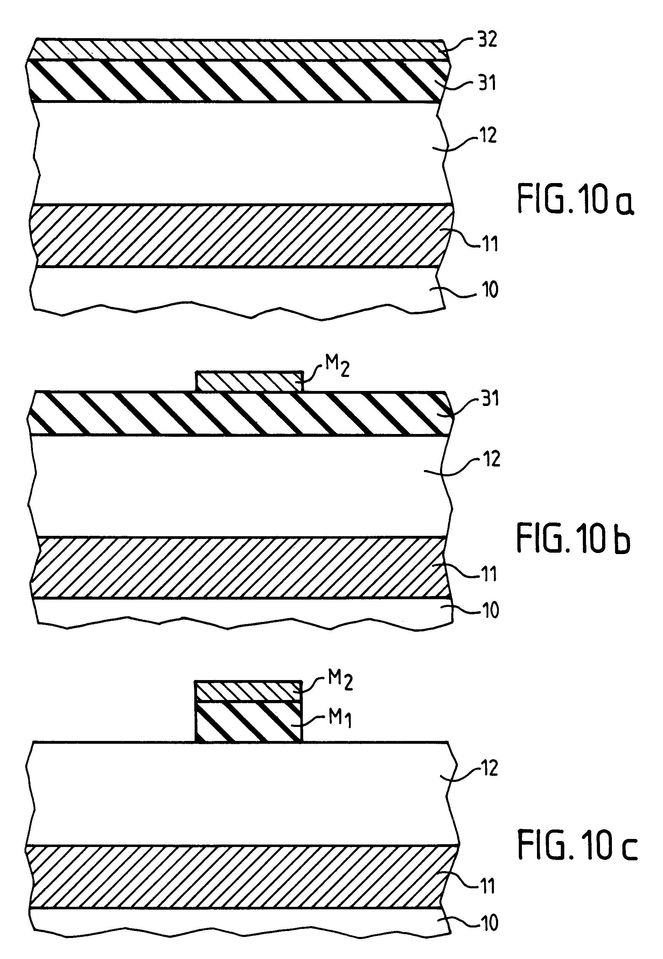

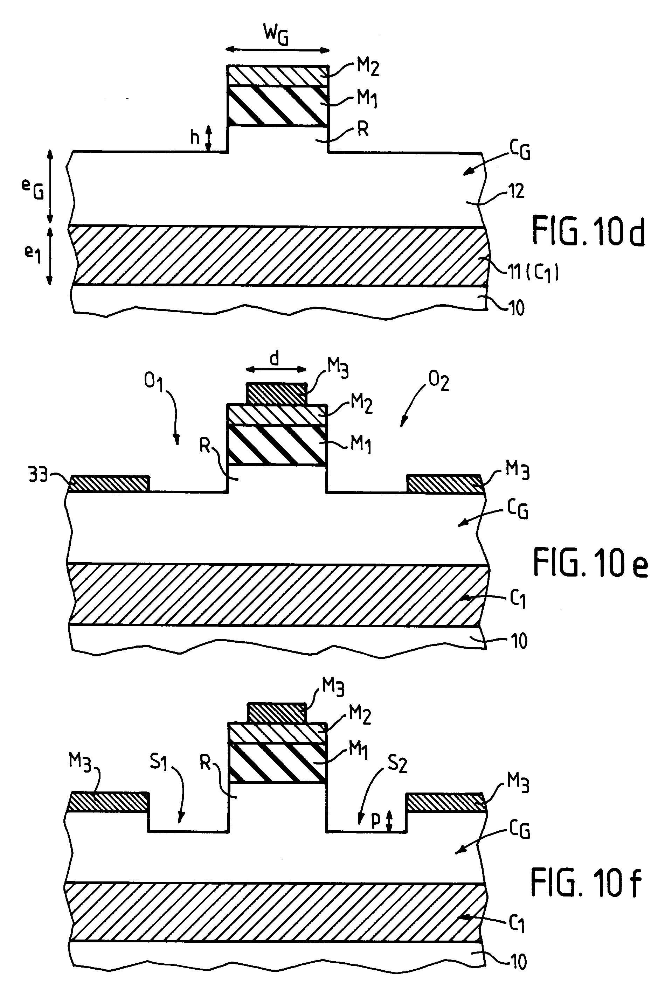

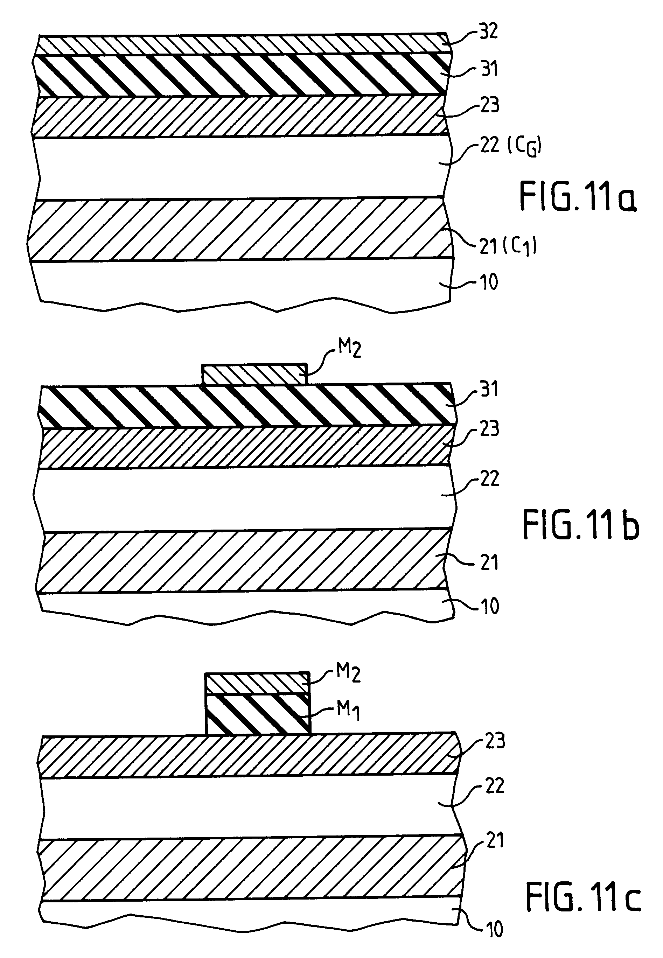

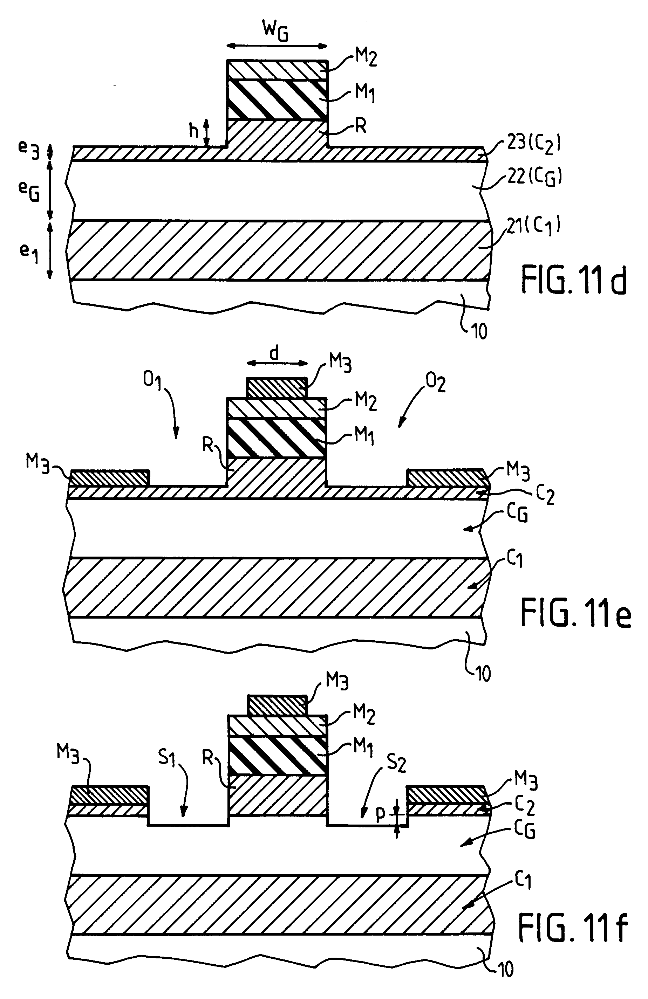

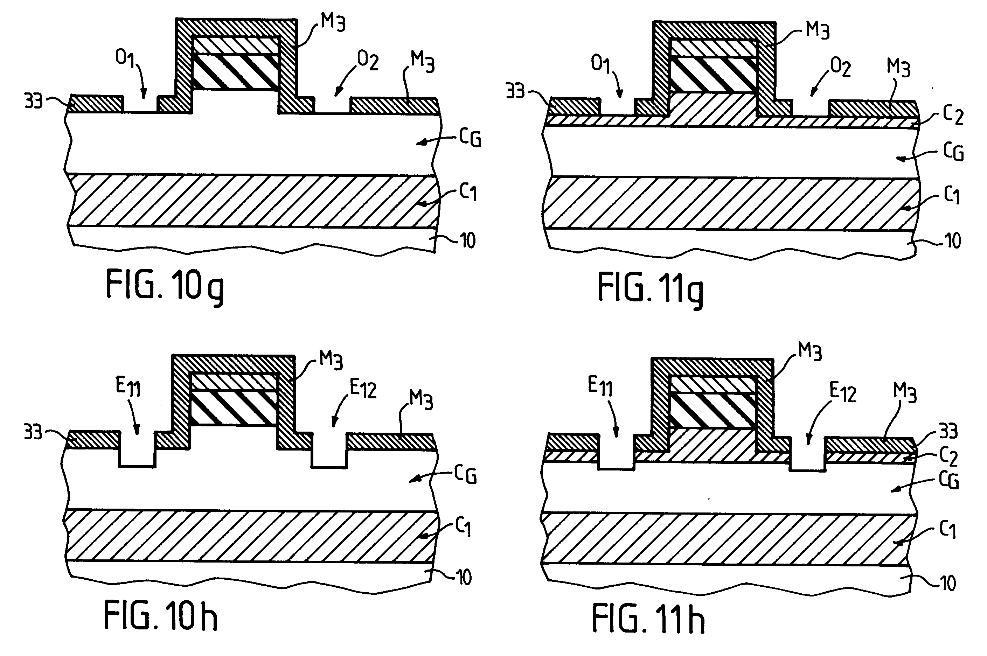

A l'issue de la formation de l'une ou l'autre de ces structures de couches épitaxiales planes, on commence la seconde étape du procédé selon l'invention dont les opérations sont illustrées par les figures 10 et 11 respectivement pour les structures I et II. Dans cette seconde étape, on élabore le ruban R en relief sur la couche supérieure de matériau semiconducteur, respectivement 12 ou 23.

A cet effet, on réalise d'abord un système de masquage $M_1$, $M_2$. On peut par exemple réaliser ce système au moyen d'une couche 31 en un diélectrique tel que $SiO_2$, d'epaisseur 500 à 700 nm, densifiée par recuit à 420°C pendant 30mn. Cette couche 31 de silice est ensuite couverte d'une couche 32, de photorésist, d épaisseur 0,7 à $1 \mu m$, qui est recuite une première fois à 90° pendant 30 mn (voir les figures 10a et 11a). Une fois insolée et dissoute, cette couche 32 laisse persister un masque $M_2$ en surface de l'emplacement prévu pour le ruban R. Puis, le dispositif est porté par pallier jusqu'à 180°C pour durcir la couche de photorésist $M_2$ (voir les figures 10b et 11b).

La couche de silice 31, protégée à l'emplacement du masque $M_2$ est gravée par la méthode dite ionique réactive, jusqu'à atteindre la surface supérieure de la structure semi-conductrice, au moyen de gaz $CHF_3$, formant alors sous le masque $M_2$, le masque $M_1$ de même forme et surface (voir les figures 10c et 11c).

Lorsque la surface supérieure de la structure semiconductrice est atteinte, la gravure ionique réactive est poursuivie autour du système de masquage $M_1$, $M_2$, par exemple au moyen de gaz tels que $CH_4/H_2$ en mélange. L'utilisation de ce melange pour la gravure des composés III-V contenant l'élément In, est connue de la publication intitulée "A Novel process for reactive ion etching on InP, using $CH_4/H_2$" par U.NIGGEBRÜGGE, M.KLUG, G.GARUS, dans "Int.Symp.GaAs and related compounds, karuizawa, Japan 1985" de "l'Inst.Phys. Conf.serv.N° 79, Chapter 6", pages 367-372.

Le système de masquage décrit plus haut est choisi pour pouvoir supporter, lors de la gravure des matériaux semi-conducteurs l'utilisation d'autres gaz notamment des composés chlorés.

La profondeur de gravure voulue dans la structure semiconductrice est la hauteur h du ruban R. Cette gravure est donc pratiquée, selon la structure, dans la couche 12 ou dans la couche 23, qui dans les deux exemples décrits précédemment est en matériau InP.

Le contrôle de la profondeur gravée peut être fait en temps réel, en utilisant la méthode décrite dans la demande de brevet français enregistrée sous le N° 87 07 796 (voir les figures 10d et 11d).

Le ruban R de hauteur h étant ainsi élaboré reste couvert des masques $M_1$ en silice ($SiO_2$) et $M_2$ en photorésist, alors que commence la troisième étape du procédé selon l'invention.

## C/ Troisième étape

Pour mettre en oeuvre cette troisième étape, qui consiste en la réalisation des sillons $S_1$ et $S_2$, de largeur $W_S$ = 1 à 4 $\mu$m dans les parties courbes du guide, c'est-à-dire le long des flancs du ruban R dans les parties courbes du guide, on réalise d'abord une couche 33 de photoresist, couvrant tout l'ensemble du dispositif sur une épaisseur de 2 à 4 $\mu$m.

Par insolation puis dissolution, on ouvre dans cette couche de photorésist 33 des fenêtres coïncidant avec les surfaces des futurs sillons $S_1$ et $S_2$ - (voir les figures 10e et 11e) formant ainsi un masque $M_3$.

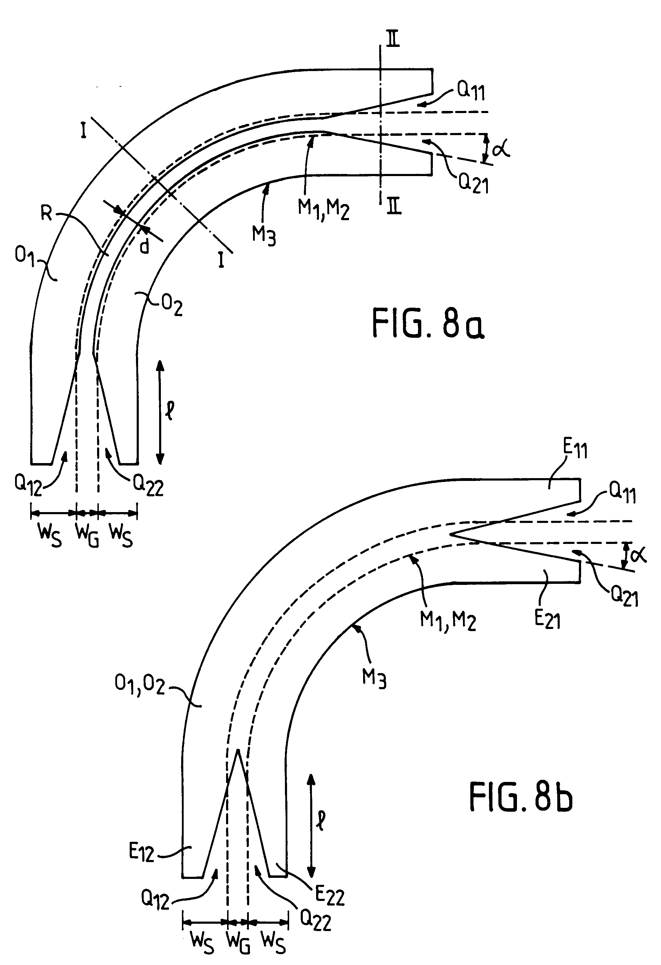

La figure 8a montre, vue du dessus, une disposition particulière du masque $M_3$ vis-à-vis des masques $M_1$ et $M_2$ superposés, selon laquelle on a ouvert deux fenêtres $O_1$ et $O_2$ en coïncidence avec les futurs sillons $S_1$ et $S_2$, en prenant cependant la précaution de réaliser l'intervalle d entre $O_1$ et $O_2$, au dessus de $M_1$, $M_2$ inférieur à la dimension $W_G$ du ruban R (ou des masques $M_1$, $M_2$). De cette manière, les flancs des sillons les plus éloignés du ruban R sont délimités par le masque $M_3$, tandis que les flancs des sillons les plus proches du ruban R sont délimités par les masques superposés $M_1$, $M_2$.

La figure 8b montre, vue du dessus, une disposition particulièrement avantageuse du masque $M_3$, selon laquelle les ouvertures $O_1$ et $O_2$ se rejoignent au-dessus de $M_1$, $M_2$ de manière à ne faire qu'une seule ouverture, présentant une forme de queue d'aronde à chaque extrémité pour former les parties $E_{11}$, $E_{12}$, $E_{21}$, $E_{22}$ des sillons $S_1$ et $S_2$. Ces parties $E_{11}$, $E_{12}$, $E_{21}$ et $E_{22}$ auront favorablement une dimension :

$$\ell \simeq 50\ \mu m \text{ (voir la figure 2)}$$

Dans ces conditions, les flancs de $S_1$ et $S_2$ les plus éloignés de R sont délimités par $M_3$ et les flancs les plus proches de R sont délimités par $M_1$, $M_2$, comme il est montré sur les figures 10e, 11e et 10g, 11g, qui sont des coupes de la figure 8a selon les plans I-I et II-II respectivement.

Dans les ouvertures $O_1$, $O_2$, selon la configuration choisie, on pratique alors la gravure de la ou des couches de matériau semiconducteur, c'est-à-dire de la couche 12 dans le cas de l'homostructure de l'exemple I et des couches 23, 22 dans le cas de l'hétérostructure de l'exemple II, jusqu'à ce que la couche $C_G$ de matériau 12 ou 22 soit attaquée sur une faible épaisseur, en tout cas inférieure à 20 % de son épaisseur totale. Une gravure sur une profondeur $\underline{p}$ de l'ordre de 5 à 16 % de son épaisseur totale sera préférée. Par exemple pour une épaisseur totale $e_G$ de 1,5 $\mu$m de la couche 22, on pourra choisir une profondeur p pour les sillons dans cette 22, d'environ 0,2 $\mu$m.

La gravure des couches 12, ou 23, 22 se fait par gravure ionique réactive comme décrite précédemment, par les mêmes gaz $CH_4/H_2$, dans les mêmes conditions.

On notera que le choix des matériaux pour réaliser les deux systèmes de masquage nécessaires à la réalisation du dispositif, a été fait de telle sorte que les masques $M_1$, $M_2$ sont conservés intacts lors de l'élaboration du masque $M_3$. D'autres matériaux sont possibles pour réaliser ces deux systèmes de masquage pourvu qu'ils procurent d'une part ce résultat et que d'autre part, les masques ainsi constitués, ne se déforment pas et notamment ne se gravent pas, au moyen des mêmes gaz que ceux qui sont utilisés pour la gravure des structures semiconductrices.

Les figures 10f et 10h montrent le résultat de la gravure dans les ouvertures $O_1$, $O_2$, selon les coupes I-I et II pour la structure de l'exemple I, et les figures 11f et 11h montrent ce même résultat, selon les mêmes coupes pour la structure de l'exemple II.

La disposition des masques les uns par rapport au autres telle que montrée figure 8a et plus spécialement figure 8b est aussi particulièrement avantageuse. En effet, du fait que les flancs des sillons sont délimités par $M_1$, $M_2$ le long du ruban, la gravure des sillons le long du ruban R dans la troisième étape se fait parfaitement à l'alignement de la gravure donnant naissance au ruban R dans la deuxième étape.

La disposition de la figure 8a, quoi qu'un peu moins simple que celle de la figure 8b conduit au même résultat.

Le procédé selon l'invention permet, avec des masques réalisés d'une façon simple, c'est-à-dire alignés les uns vis-à-vis des autres de façon non critique, d'obtenir l'auto-alignement parfait des flancs des sillons sur les flancs des rubans. On minimise ainsi les effets néfastes de la rugosité des flancs du guide.

En fin de procédé, le masque $M_2$ (couche 32) en photorésist est éliminé par dissolution dans l'acétone, et le masque $M_1$ (couche 31) en silice est éliminé au moyen d'acide fluorhydrique (HF). Le masque $M_3$ en photorésist s'élimine également à l'acétone.

On notera enfin que la réalisation d'un sillon (ou rainure) dans la partie concave de la courbe du guide n'est pas absolument indispensable. Mais cette réalisation rend la mise en oeuvre plus aisée, plus performante et améliore aussi le confinement de la lumière dans le guide.

**Revendications**

1. Dispositif semiconducteur comprenant un guide de lumière intégré, lequel présente au moins une partie rectiligne et une partie courbe, et des moyens pour obtenir le confinement de la lumière dans le guide dans la partie courbe, lesquels incluent au moins une rainure disposée le long de l'un des deux flancs du guide dans la région de la courbe, ladite rainure ayant une structure telle qu'elle présente une profondeur constante que sa partie centrale suit exactement ledit flanc du guide dans la partie courbe et que ses extremités s'ecartent dudit flanc du guide à l'entrée et à la sortie de la partie courbe,

caractérisé en ce que ledit guide intégré a une structure consistant en une couche guidante et, surplombant la couche guidante, en un ruban en relief pour déterminer le chemin optique suivi par la lumière dans la couche guidante, et en ce que ladite structure de rainure est en outre telle que :

- sa partie centrale suit exactement le flanc du ruban de guidage dans la partie courbe,
- ses extrémités s'écartent du flanc de ce ruban à l'entrée et à la sortie de la partie courbe, et

- son fond est disposé dans la couche guidante à un niveau qui n'atteint pas la partie inférieure de cette couche guidante.

2. Dispositif selon la revendication 1, caractérisé en ce qu'il présente une rainure de même structure respectivement de part et d'autre du guide dans sa partie courbe.

3. Dispositif selon l'une des revendications 1 ou 2, caractérisé en ce que les extrémités de la rainure s'écartent du ruban de guidage d'un angle de 2 à 5°.

4. Dispositif selon la revendication 3, caractérisé en ce que l'angle est de 3°.

5. Dispositif selon la revendication 3, caractérisé en ce que l'angle est de 4°.

6. Dispositif selon l'une des revendications précédentes, caractérisé en ce que la rainure présente une profondeur pratiquée dans l'épaisseur de la couche guidante inférieure en valeur à 20 % de l'épaisseur de cette couche guidante.

7. Dispositif selon l'une des revendications 1 à 6, caractérisé en ce que la structure du guide est du type à deux couches, telles que la couche guidante est réalisée en surface d'une couche de confinement d'indice inférieur et que le ruban de guidage est formé en surface de la couche guidante dans le même matériau.

8. Dispositif selon la revendication 7, caractérisé en ce que la structure de guides à deux couches est du type homostructure telle que la couche de confinement est en un matériau III-V d'un type de conductivité d'un premier niveau de résistivité et la couche guidante est du même materiau III-V du même type de conductivité d'un second niveau de résistivité, réalisées sur un substrat du groupe III-V.

9. Dispositif selon la revendication 8, caractérisé en ce que la couche de confinement est en InP de type $n^+$ et la couche guidante et le ruban en InP de type $n^-$, réalisées sur un substrat en InP semi-isolant.

10. Dispositif selon l'une des revendications 1 à 6, caractérisé en ce que la structure du guide est du type à trois couches telle que la couche guidante est réalisée entre deux couches de confinement d'indice inférieur, le ruban de guidage étant réalisé dans le matériau de la couche supérieure.

11. Dispositif selon la revendication 10, caractérisé en ce que la structure de guide à trois couches est du type heterostructure, les deux couches de confinement étant d'un matériau III-V binaire et la couche guidante étant d'un matériau III-V ternaire ou quaternaire, le substrat étant d'un matériau III-V binaire.

12. Dispositif selon la revendication 11, caractérisé en ce que les couches de confinement sont en InP et la couche guidante est en GaInAsP, réalisées sur un substrat en InP semi-isolant.

13. Dispositif selon l'une des revendications précédentes, caractérisé en ce que la couche guidante présente une épaisseur d'environ 1,5 $\mu$m, la couche supérieure de confinement lorsqu'elle existe une épaisseur de 0,25 $\mu$m, le ruban de guidage forme un relief d'épaisseur environ 0,75 $\mu$m et de dimension transversale environ 4 $\mu$m, la rainure a une profondeur telle que son fond est disposé à environ 0,2 $\mu$m de la surface supérieure de la couche guidante.

14. Procédé de réalisation d'un dispositif selon l'une des revendications 1 à 6, comprenant au moins la succession d'étapes suivantes :
    a) Formation d'une structure d'au moins deux couches de matèriau semiconducteur du groupe III-V, la couche inférieure (11,21) présentant un faible indice pour constituer une couche de confinement $C_1$, la couche qui la recouvre (12,22) présentant un indice plus élevé et étant transparente au rayonnement de longueur d'onde $\lambda$ envisagé pour le fonctionnement du dispositif, pour constituer la couche guidante $C_G$;
    b) Réalisation en relief sur la couche guidante $C_G$, d'un ruban R, de hauteur h et de largeur $W_G$, présentant une partie courbe, ruban R destiné à délimiter le chemin de guidage dans la couche sous-jacente $C_G$, cette réalisation étant obtenue par la mise en oeuvre d'un système de masque $M_1$, $M_2$, d'une première sorte couvrant uniquement la région du ruban R, suivie de la mise en oeuvre d'une gravure, par la méthode dite ionique réactive, des régions semiconductrices autour du système de masque $M_1$, $M_2$ sur une profondeur h, au moyen de gaz rendant cette gravure selective vis-à-vis du système de masques, la couche guidante sous le ruban R présentant alors une épaisseur $e_G$; et
    c) Réalisation en surface du dispositif ainsi obtenu de deux sillons respectivement $S_1$ et

$S_2$, présentant une profondeur p dans la couche guidante $C_G$, formés dans la région courbe du ruban R, de part et d'autre de ce dernier sur une largeur $W_S$, et s'écartant de ce dernier dans les sorties de la courbe d'un angle $\alpha$, pour confiner la lumière latéralement dans la couche guidante $C_G$, cette réalisation étant obtenue par la mise en oeuvre d'un système de masquage $M_3$, d'une seconde sorte, présentant des ouvertures $O_1$ et $O_2$ en coïncïdence avec les régions des sillons $S_1$ et $S_2$ respectivement, ouvertures dont la distance d au-dessus du ruban R est telle que $0 \leq d < W_G$, suivie de la mise en oeuvre d'une gravure, par la méthode dite ionique réactive, des régions semiconductrices dans les ouvertures $O_1$, $O_2$ jusqu'à atteindre une profondeur de gravure p dans la couche guidante $C_G$ d'épaisseur $e_G$, telle que p < 20 % de $e_G$.

15. Procédé selon la revendication 14, caractérisé en ce que dans l'étape a), on forme une homostructure de deux couches (11,12) de matériaux du groupe III-V.

16. Procédé selon la revendication 15, caractérisé en ce que dans l'étape b) le ruban R est formé dans le matériau de la seconde couche (12) de l'homostructure.

17. Procédé selon la revendication 16, caractérisé en ce que l'homostructure en deux couches est formée d'un substrat (11) en InP de type de conductivité n$^+$ sur lequel est réalisé par croissance épitaxiale, une couche en InP de type de conductivité n$^-$.

18. Procédé selon la revendication 17, caractérisé en ce que, l'homostructure en deux couches est formée d'une première couche épitaxiale (11) en InP de type de conductivité n$^+$ et d'une couche supérieure (12) en InP de type de conductivité n$^-$ disposées en surface d'un substrat massif monocristallin semi-isolant (10) en InP.

19. Procédé selon la revendication 14, caractérisé en ce que dans l'étape a) on forme une hétérostructure en deux couches (21,22) de matériau du groupe III-V.

20. Procédé selon la revendication 19, caractérisé en ce que, dans l'étape b) le ruban R est formé dans le matériau de la couche supérieure (22) de l'hétérostructure en deux couches.

**21.** Procédé selon la revendication 19, caractérisé en ce que dans l'étape a) on forme une double hétérostructure par le moyen d'une troisième couche (23) de matériau du groupe III-V disposée en surface des deux premières couches (21,22), telle qu'elle présente un indice inférieur à l'indice de la seconde couche (22) de manière telle que cette seconde couche (22) est la couche guidante $C_G$.

**22.** Procédé selon la revendication 21, caractérisé en ce que, dans l'étape b) le ruban R est formé dans la troisième couche (23).

**23.** Procédé selon l'une des revendications 19 à 22, caractérisé en ce que, dans la ou les hétérostructures (21,22) ou (21,22,23), la première couche (21) est une couche épitaxiale binaire d'InP de type de conductivité $n^-$, la seconde couche (22) est une couche épitaxiale quaternaire de GaInAsP, et la troisième couche (23), lorsqu'elle existe, est une couche épitaxiale binaire d'InP de type de conductivité $n^-$, cette succession de couches étant disposée sur un substrat massif en InP monocristallin semi-isolant.

**24.** Procédé selon l'une des revendications 17, 18 ou 23, caractérisé en ce que le matériau InP est obtenu de type de conductivité $n^-$ par son seul dopage résiduel, de type de conductivité $n^+$ par dopage au moyen d'ions $S^+$ à une concentration de $4.10^{18}$, en ce que le substrat massif en InP semi-isolant lorsqu'il existe est obtenu par tirage par la méthode Czochralski sous encapsulation de l'ordre de $14.10^{16}$, et en ce que les couches épitaxiales sont obtenues par l'une des méthodes dites MOVPE ou VPE.

**25.** Procédé selon l'une des revendications 14 à 24, caractérisé en ce que :

$0,5\ \mu m \leq h \leq 0,75\ \mu m\quad W_G \simeq 4\ \mu m$
$p \leq 20\ \%\ de\ e_G\quad W_S = 1\ à\ 4\ \mu m$
$1,5\ \mu m \leq e_G \leq 2,5\ \mu m\quad 2° \leq \alpha \leq 5°$

**26.** Procédé selon l'une des revendications 14 à 25, caractérisé en ce que le premier système de masquage selon l'étape 6 est formé d'une superposition d'une couche 31 de silice ($SiO_2$) et d'une couche 32 de photoresist.

**27.** Procédé selon la revendication 26, caractérisé en ce que dans l'étape b) l'épaisseur de la couche (31) de silice est de l'ordre de 500 à 700 nm, en ce que l'épaisseur de la couche (32) de photoresist est de l'ordre de 0,7 à 1 $\mu m$, en ce que la couche de silice est cuite après son dépôt et avant le dépôt de la couche de photoresist à 420°C pendant 30 mn, en ce que la couche (32) de photoresist est cuite après son dépôt à une température d'environ 90°C pendant environ 30 mn, en ce que le ruban R est délimité par une étape de photolithographie de la couche de photoresist (32), formant ainsi un masque $M_2$, suivie d'une cuisson de la couche (32) de photoresist à 180°C par paliers, puis en ce que la couche (31) de silice ($SiO_2$) est gravée autour du masque $M_2$, par gravure ionique réactive au moyen du gaz $CHF_3$, jusqu'à découvrir la surface supérieure de la couche supérieure de matériau semiconducteur, formant ainsi sous le masque $M_2$, un masque $M_1$.

**28.** Procédé selon la revendication 27, caractérisé en ce que le ruban R est formé par gravure dans les couches semiconductrices autour du système de masquage $M_1$, $M_2$ et au moyen d'un mélange de gaz contenant au moins les gaz $CH_4/H_2$.

**29.** Procédé selon l'une des revendications 14 à 25, caractérisé en ce que le second système de masquage selon l'étape c) est formé d'une couche (33) de photorésist, d'épaisseur de 2 à 4 $\mu m$.

**30.** Procédé selon la revendication 29, caractérisé en ce que dans l'étape c, les ouvertures $O_1$, $O_2$ sont pratiquées dans la couche 33 par une étape de lithographie connue en soi formant ainsi le masque $M_3$, puis les sillons $S_1$, $S_2$ sont formés par gravure des couches semiconductrices découvertes dans les ouvertures $O_1$, $O_2$ jusqu'à atteindre la profondeur de gravure p dans la couche $C_G$, cette gravure étant pratiquée au moyen d'un mélange de gaz comprenant au moins les gaz $CH_4/H_2$ et en ce que ]es deux systèmes de masquage $M_1$, $M_2$ et $M_3$ sont éliminés par dissolution dans l'acétone en ce qui concerne la photorésist et l'acide fluorhydrique (HF) pour la silice ($SiO_2$).

**31.** Procédé selon la revendication 30, caractérisé en ce que lors de la réalisation du masque $M_3$, les ouvertures $O_1$ et $O_2$ sont formées de manière à être séparées au-dessus du ruban R encore couvert du système de masques $M_1$,$M_2$, par un distance $d < W_G$.

**32.** Procédé selon la revendication 30, caractérisé en ce que, lors de la réalisation du masque $M_3$, les ouvertures $O_1$, $O_2$ sont formées de manière à se rejoindre au-dessus du ruban R encore couvert du système de masque $M_1$,

$M_2$, pour former une seule ouverture, présentant une forme de queue d'aronde à chaque extrémité pour former les extrémités des sillons $S_1$ et $S_2$.

33. Procédé selon l'une des revendications 30 à 32, caractérisé en ce que les extrémités des ouvertures $O_1$, $O_2$ s'écartent du ruban R de l'angle $\alpha$ sur une lonqueur $\ell \simeq 50$ $\mu$m pour permettre la formation des extrémités $E_{11}$, $E_{12}$, $E_{21}$ et $E_{22}$ des sillons $S_1$ et $S_2$.

**Claims**

1. A semiconductor device comprising an integrated optical guide, which has at least one rectilinear part and a curved part, and means for confining the light in the guide in the curved part, which means include at least one groove provided along one of the two edges of the guide in the region of the curve, the said groove having a structure such that it has a constant depth, that its central part follows the said edge of the guide exactly in the curved part and that its ends move away from the said edge of the guide at the entrance to and the exit from the curved part, characterized in that the said integrated guide has a structure consisting of a guiding layer and, superimposed on the guiding layer, a ribbon in relief for determining the optical path followed by the light in the guiding layer, and in that the said groove structure is further such that:
   - its central part follows exactly the edge of the guiding ribbon in the curved part,
   - its ends move away from the edge of this ribbon at the entrance to and the exit from the curved part, and
   - its bottom is disposed in the guiding layer at a level which does not reach the lower part of this guiding layer.

2. A device according to claim 1, characterized in that it has grooves of the same structure on one side and the other of the guide in its curved part.

3. A device according to claim 1 or 2, characterized in that the ends of the groove move away from the guiding ribbon at an angle of 2° to 5°.

4. A device according to claim 3, characterized in that the angle is 3°.

5. A device according to claim 3, characterized in that the angle is 4°.

6. A device according to any one of the preceding claims, characterized in that the groove has a depth in the thickness (if the guiding layer less than 20% of the thickness of the guiding layer.

7. A device according to any one of claims 1 to 6, characterized in that the structure of the guide is of the type having two layers, such that the guiding layer is formed on the surface of a confinement layer having a lower index and that the guiding ribbon is formed on the surface of the guiding layer from the same material.

8. A device according to claim 7, characterized in that the structure of the guide having two layers is of the homo-structure type such that the confinement layer is made of a III-V material of one conductivity type at a first level of resistivity and the guiding layer is made of the same III-V material of the same conductivity type at a second level of resistivity, formed on a substrate of the III-V group.

9. A device according to claim 8, characterized in that the confinement layer is made of InP of $n^+$ type and the guiding layer and the ribbon of $n^-$ type InP, formed on a substrate of semi-insulating InP.

10. A device according to any one of claims 1 to 6, characterized in that the structure of the guide is of the type having three layers such that the guiding layer is formed between two confinement layers of lower index, the guiding ribbon being made of the material of the upper layer.

11. A device according to claim 12, characterized in that the guide structure comprising three layers is of the hetero-structure type, the two confinement layers being made of a binary III-V material and the guiding layer being made of a ternary or quaternary III-V material, the substrate consisting of a binary III-V material.

12. A device according to claim 11, characterized in that the confinement layers are made of InP and the guiding layer is made of GaInAsP, formed on a substrate of semi-insulating InP.

13. A device according to any one of the preceding claims, characterized in that the guiding layer has a thickness of about 1.5 $\mu$m, the upper confinement layer, when present, has a thickness of 0.25 $\mu$m, the guiding ribbon forms a relief having a thickness of about 0.75 $\mu$m

and a transverse dimension of about 4 $\mu$m, and the groove has a depth such that its bottom is disposed at about 0.2 $\mu$m from the upper surface of the guiding layer.

14. A method of manufacturing a device according to any one of claims 1 to 6 comprising at least the following steps in succession:

a) forming a structure of at least two layers of semiconductor material of the III-V group, the lower layer (11, 21) having a low index to constitute a confinement layer $C_1$, the layer (12, 22) covering it having a higher index and being transparent to the radiation having a wavelength $\lambda$ envisaged for the operation of the device to constitute the guiding layer $C_G$;

b) forming in relief on the guiding layer $C_G$ a ribbon R having a height **h** and a width $W_G$ having a curved part, which ribbon R is intended to limit the guiding path in the underlying layer $C_G$, this step being effected by the use of a system of masks $M_1$, $M_2$ of a first kind covering solely the region of the ribbon R followed by the use of etching by the method known as reactive ion etching of the semiconductor regions around the system of masks $M_1$, $M_2$ over a depth **h**, by means of gases rendering this etching selective with respect to the system of masks, the guiding layer under the ribbon R then having a thickness $e_G$; and

c) forming in the surface of the device thus obtained two grooves $S_1$ and $S_2$ respectively, having a depth **p** in the guiding layer $C_G$ formed in the curved part of the ribbon R on one side and the other of the latter, with a width $W_S$ and moving away from the latter at the ends of the curve at an angle $\alpha$, to confine the light laterally in the guiding layer $C_G$, this step being obtained by the use of a masking system $M_3$ of a second kind having openings $O_1$ and $O_2$ in co-incidence with the regions of the grooves $S_1$ and $S_2$ respectively, the spacing **d** of these openings above the ribbon R being such that $0 \leq d < W_G$, followed by the use of etching, by the method known as reactive ion etching of the semiconductor regions in the openings $O_1$, $O_2$ until an etching depth **p** in the guiding layer $C_G$ of thickness $e_G$ is obtained such that **p** < 20% of $e_G$.

15. A method according to claim 14, characterized in that in the step a) a homo-structure of two layers (11, 12) of material of the III-V group is formed.

16. A method according to claim 15, characterized in that in the step b) the ribbon R is formed in the material of the second layer (12) of the homo-structure.

17. A method according to claim 16, characterized in that the homo-structure of two layers is formed by a substrate (11) of InP of $n^+$ conductivity type, on which a layer of InP of the $n^-$ conductivity type is formed by epitaxial growth.

18. A method according to claim 17, characterized in that the homo-structure of two layers is formed by a first epitaxial layer (11) of InP of $n^+$ conductivity type and by an upper layer (12) of InP of $n^-$ conductivity type disposed on the surface of a solid, monocrystalline, semi-insulating substrate (10) of InP.

19. A method according to claim 14, characterized in that in the step a) a hetero-structure of two layers (21, 22) of material of the III-V group is formed.

20. A method according to claim 19, characterized in that in the step b) the ribbon R is formed in the material of the upper layer (22) of the hetero-structure of two layers.

21. A method according to claim 19, characterized in that in the step a) a double hetero-structure is formed by means of a third layer (23) of material of the III-V group disposed on the surface of the two first layers (21, 22) such that it has a lower index than that of the second layer (22) so that this second layer (22) is the guiding layer $C_G$.

22. A method according to claim 21, characterized in that in the step b) the ribbon R is formed in the third layer (23).

23. A method according to any one of claims 19 to 22, characterized in that in the hetero-structure or structures (21, 22) or (21, 22, 23) the first layer (21) is a binary epitaxial layer of InP of $n^-$ conductivity type, the second layer (22) is a quaternary epitaxial layer of GaInAsP and the third layer (23), if present, is a binary epitaxial layer of InP of $n^-$ conductivity type, this succession of layers being disposed on a solid substrate of monocrystalline, semi-insulating InP.

24. A method according to any one of claims 17, 18 or 23, 30, characterized in that the InP material is obtained with the $n^-$ conductivity type solely by virtue of its residual doping, and with the n+ type by doping with S+ ions at a concentration of $4.10^{18}$, in that the solid substrate of semi-insulating InP, if present, is obtained by drawing by the Czochralski method with encapsulation of the order of $14.10^{16}$, and in that the epitaxial layers are obtained by one of the methods known as MOVPE and VPE.

25. A method according to any one of claims 14 to 24, characterized in that

$0.5\ \mu m \leq h \leq 0.75\ \mu m$ WG ≈ 4 $\mu m$
$p < 20\%$ of $e_G$ $W_S$ = 1 to 4 $\mu m$
$1.5\ \mu m \leq e_G \leq 2.5\ \mu m$ 2° $\leq \alpha \leq 5°$.

26. A method according to any one of claims 14 to 25, characterized in that the first masking system according to stage b) is formed by superimposition of a layer 31 of silica ($SiO_2$) and a layer 32 of photoresist.

27. A method according to claim 26, characterized in that in the step b) the thickness of the layer 31 of silica is of the order of 500 to 700 nm, in that the thickness of the layer 32 of photoresist is of the order of 0.7 to 1 $\mu m$, in that the silica layer is baked after its deposition and before the deposition of the photoresist layer at 420°C for 30 min, in that the photoresist layer 32 is baked after its deposition at a temperature of about 90°C for about 30 min, in that the ribbon R is limited by a step of photolithography of the photoresist layer 32, thus forming a mask $M_2$, followed by baking of the layer 32 of photoresist at 180°C in stages, and in that then the layer 31 of silica ($SiO_2$) is etched around the mask $M_2$ by reactive ion etching by means of the gas $CHF_3$ until the upper surface of the upper layer of the semiconductor material is exposed, thus forming a mask $M_1$ under the mask $M_2$.

28. A method according to claim 27, characterized in that the ribbon R is formed by etching in the semiconductor layers around the masking system $M_1$, $M_2$ and by means of a mixture of gases containing at least the gases $CH_4/H_2$.

29. A method according to any one of claims 26 to 28, characterized in that the second masking system according to stage c) is formed by a photoresist layer 33 having a thickness of 2 to 4 $\mu m$.

30. A method according to claim 29, characterized in that in the step c) the openings $O_1$, $O_2$ are formed in the layer 33 by a step of lithography known *per se,* thus forming the mask $M_3$, after which the grooves $S_1$, $S_2$ are formed by etching of the semiconductor layers exposed in the openings $O_1$, $O_2$ until the etching depth **p** in the layer $C_G$ is attained, this etching step being effected by means of a mixture of gases comprising at least the gases $CH_4/H_2$, and in that the two masking systems $M_1$, $M_2$ and $M_3$ are removed by dissolving in acetone as to the photoresist and in hydrofluoric acid (HF) as to the silica ($SiO_2$).

31. A method according to claim 30, characterized in that during the formation of the mask $M_3$, the openings $O_1$ and $O_2$ are formed so that they are mutually separated above the ribbon R still covered by the system of masks $M_1$, $M_2$ by a space d < $W_G$.

32. A method according to claim 30, characterized in that during the formation of the mask $M_3$ the openings $O_1$, $O_2$ are formed so that they join each other above the ribbon R still covered by the system of masks $M_1$, $M_2$ so as to form a single opening having the form of a dovetail at each end to form the ends of the grooves $S_1$ and $S_2$.

33. A method according to any one of claims 30 to 33, characterized in that the ends of the openings $O_1$, $O_2$ move away removed from the ribbon R at the angle $\alpha$ over a length $\ell$ ≈ 50 $\mu m$ in order to permit forming the ends $E_{11}$, $E_{12}$, $E_{21}$ and $E_{22}$ of the grooves $S_1$ and $S_2$.

**Patentansprüche**

1. Halbleitervorrichtung mit einem integrierten Lichtleiter, der mindestens einen geradlinigen und einen gekrümmten Bereich enthält, und mit Mitteln, um die Einschließung des Lichts im gekrümmten Bereich des Lichtleiters zu erhalten, wobei diese Mittel mindestens eine sich entlang einer der beiden Flanken des Lichtleiters im gekrümmten Bereich erstreckende Rille einer solchen Struktur aufweisen, daß die Rille eine konstante Tiefe besitzt, daß ihr zentraler Bereich genau entlang der Flanke des Lichtleiters im gekrümmten Bereich verläuft und daß ihre Enden sich von dieser Flanke des Lichtleiters am Ein- und Ausgang des gekrümmten Bereichs entfernen, dadurch gekennzeichnet, daß der integrierte Lichtleiter eine Struktur besitzt, die aus einer lichtführenden Schicht und, über dieser lichtführenden Schicht, aus einem vorstehenden Band besteht, um den optischen Weg des Lichts in der lichtführenden Schicht zu bestimmen, und daß die Struktur der Rille weiter so gewählt ist, daß

- ihr zentraler Bereich sich genau an die Flanke des Führungsbandes im gekrümmten Bereich anpaßt,
- ihre Enden sich von der Flanke des Bandes am Kurvenein- und
- ausgang entfernen und
- ihr Boden in der lichtführenden Schicht in einer Höhe angeordnet ist, die nicht den unteren Bereich dieser lichtführenden Schicht erreicht.

2. Vorrichtung nach Anspruch 1, dadurch gekennzeichnet, daß sie eine Rille gleicher Struktur auf jeder Seite des Lichtleiters im gekrümmten Bereich besitzt.

3. Vorrichtung nach einem der Ansprüche 1 oder 2, dadurch gekennzeichnet, daß die Enden der Rille sich vom Führungsband mit einem Winkel von 2 bis 5° entfernen.

4. Vorrichtung nach Anspruch 3, dadurch gekennzeichnet, daß der Winkel 3° beträgt.

5. Vorrichtung nach Anspruch 3, dadurch gekennzeichnet, daß der Winkel 4° beträgt.

6. Vorrichtung nach einem der vorhergehenden Ansprüche, dadurch gekennzeichnet, daß die Rille eine Tiefe in der Dicke der lichtführenden Schicht besitzt, die unter 20% der Dicke dieser lichtführenden Schicht liegt.

7. Vorrichtung nach einem der Ansprüche 1 bis 6, dadurch gekennzeichnet, daß die Struktur des Lichtleiters aus zwei Schichten besteht, derart, daß die lichtführende Schicht auf einer Einschließungsschicht mit geringerem Brechungsindex aufgebaut ist, und daß das Führungsband auf der Oberfläche der lichtführenden Schicht aus demselben Material ausgebildet ist.

8. Vorrichtung nach Anspruch 7, dadurch gekennzeichnet, daß die Struktur der aus zwei Schichten bestehenden Lichtleiter eine Homostruktur ist, derart, daß die Einschließungsschicht aus einem Material der Gruppe III-V mit einem Leitfähigkeitstyp und einem ersten Niveau des spezifischen Widerstands besteht, während die lichtführende Schicht aus demselben Material der Gruppe III-V mit demselben Leitfähigkeitstyp, aber einem zweiten Niveau des spezifischen Widerstands besteht, die auf einem Substrat der Gruppe III-V aufgebaut sind.

9. Vorrichtung nach Anspruch 8, dadurch gekennzeichnet, daß die Einschließungsschicht aus InP vom Typ $n^+$ ist, während die lichtleitende Schicht und das Band aus InP vom Typ $n^-$ sind, die sich auf einem halbisolierenden Substrat aus InP befinden.

10. Vorrichtung nach einem der Ansprüche 1 bis 6, dadurch gekennzeichnet, daß die Lichtleiterstruktur drei Schichten enthält, derart, daß die lichtleitende Schicht zwischen zwei Einschließungsschichten mit einem geringeren Brechungsindex liegt, wobei das Führungsband aus dem Material der oberen Schicht besteht.

11. Vorrichtung nach Anspruch 10, dadurch gekennzeichnet, daß die Lichtleiterstruktur mit drei Schichten eine Heterostruktur ist, wobei zwei Einschließungsschichten aus einem binären Material der Gruppe III-V und die lichtleitende Schicht aus einem ternären oder quaternären Material der Gruppe III-V besteht, während das Substrat aus einem binären Material der Gruppe III-V ist.

12. Vorrichtung nach Anspruch 11, dadurch gekennzeichnet, daß die Einschließungsschichten aus InP und die lichtleitende Schicht aus GalnAsP bestehen und ein halbisolierendes Substrat aus InP verwendet wird.

13. Vorrichtung nach einem der vorhergehenden Ansprüche, dadurch gekennzeichnet, daß die lichtleitende Schicht eine Dicke von etwa 1,5 $\mu$m, die obere Einschließungsschicht, sofern sie existiert, eine Dicke von 0,25 $\mu$m besitzt, daß das Führungsband einen Vorsprung einer Dicke von etwa 0,75 $\mu$m und einer Querabmessung von etwa 4 $\mu$m besitzt und daß die Rille eine solche Tiefe hat, daß ihr Boden etwa 0,2 $\mu$m Abstand zur Oberfläche der lichtführenden Schicht aufweist.

14. Verfahren zur Herstellung einer Vorrichtung nach einem der Ansprüche 1 bis 6, das mindestens folgende Verfahrensschritte in Aufeinanderfolge enthält:

a) Bildung einer Struktur von mindestens zwei Schichten aus Halbleitermaterial der Gruppe III-V, wobei die untere Schicht (11, 21) einen kleinen Brechungsindex besitzt, um eine Einschließungsschicht $C_1$ zu bilden, die darüberliegende Schicht (12, 22) einen höheren Brechungsindex besitzt und für die beim Betrieb der Vorrichtung vorgesehene Strahlung der Wellenlänge $\lambda$ transparent ist, um die lichtführende Schicht $C_G$ zu bilden;

b) reliefartige Ausbildung eines Bandes R mit einer Höhe h und einer Breite $W_G$ auf der lichtführenden Schicht $C_G$, wobei dieses Band einen gekrümmten Bereich aufweist und zur Begrenzung des Lichtpfads in der darunterliegenden Schicht $C_G$ bestimmt ist und wobei diese Ausbildung durch Anwendung eines Systems von Masken $M_1$, $M_2$ einer ersten Art erhalten wird, die nur die Zone des Bandes R bedecken, gefolgt von einem Ätzvorgang nach der reaktiven Ionenmethode in den Halbleiterzonen um das System der Masken $M_1$, $M_2$ herum über eine Tiefe h und mit Hilfe von Gasen, die diesen Ätzvorgang selektiv gegenüber dem Maskensystem machen, worauf die lichtführende Schicht unter dem Band R eine Dicke $e_G$ besitzt; und

c) Herstellung von zwei Rillen $S_1$ und $S_2$ auf der Oberfläche der so erhaltenen Vorrichtung mit einer Tiefe p in der lichtleitenden Schicht $C_G$, wobei die Rillen im gekrümmten Bereich des Bandes R zu dessen beiden Seiten über eine Breite $W_S$ ausgebildet sind und sich von dem Band an den Kurvenenden mit einem Winkel $\alpha$ entfernen, um das Licht seitlich in der leitenden Schicht $C_G$ einzuschließen, wobei diese Ausbildung durch Anwendung eines Maskensystems $M_3$ einer zweiten Art erhalten wird, das Öffnungen $O_1$ und $O_2$ in Koinzidenz mit den Bereichen der Rillen $S_1$ und $S_2$ bildet, deren Abstand d oberhalb des Bandes R so gewählt ist, daß gilt $0 \leq d < W_G$, gefolgt von einem Ätzvorgang nach der reaktiven Ionenmethode in den Halbleiterregionen der Öffnungen $O_1$, $O_2$, bis eine Ätztiefe p in der lichtleitenden Schicht $C_G$ einer Dicke von $e_G$ erreicht wird, wobei gilt: p < 20% von $e_G$.

15. Verfahren nach Anspruch 14, dadurch gekennzeichnet, daß im Schritt a) eine Homostruktur aus zwei Schichten (11, 12) von Materialien der Gruppe III-V gebildet wird.

16. Verfahren nach Anspruch 15, dadurch gekennzeichnet, daß im Schritt b) das Band R in dem Material der zweiten Schicht (12) der Homostruktur ausgebildet wird.

17. Verfahren nach Anspruch 16, dadurch gekennzeichnet, daß die Homostruktur aus drei Schichten von einem Substrat (11) aus InP des Leitfähigkeitstyps $n^+$ gebildet wird, auf dem durch epitaxiales Wachstum eine Schicht aus InP des Leitfähigkeitstyps $n^-$ ausgebildet wird.

18. Verfahren nach Anspruch 17, dadurch gekennzeichnet, daß die Homostruktur aus zwei Schichten von einer ersten epitaxialen Schicht (11) aus InP des Leitfähigkeitstyps $n^+$ und einer oberen Schicht (12) aus InP des Leitfähigkeitstyps $n^-$ gebildet wird, die auf die Oberfläche eines massiven monokristallinen halbisolierenden Substrats (10) aus InP aufgebracht sind.

19. Verfahren nach Anspruch 14, dadurch gekennzeichnet, daß im Verfahrensschritt a) eine Heterostruktur aus zwei Schichten (21, 22) eines Materials der Gruppe III-V gebildet wird.

20. Verfahren nach Anspruch 19, dadurch gekennzeichnet, daß im Verfahrensschritt b) das Band R im Material der oberen Schicht (22) der Heterostruktur aus zwei Schichten ausgebildet wird.

21. Verfahren nach Anspruch 19, dadurch gekennzeichnet, daß im Verfahrensschritt a) eine doppelte Heterostruktur mit Hilfe einer dritten Schicht (23) aus einem Material der Gruppe III-V gebildet wird, die auf der Oberfläche der beiden ersten Schichten (21, 22) liegt und einen Brechungsindex besitzt, der kleiner als der Brechungsindex der zweiten Schicht (22) ist, so daß diese zweite Schicht (22) die lichtleitende Schicht $C_G$ ist.

22. Verfahren nach Anspruch 21, dadurch gekennzeichnet, daß im Verfahrensschritt b) das Band R in der dritten Schicht (23) ausgebildet wird.

23. Verfahren nach einem der Ansprüche 19 bis 22, dadurch gekennzeichnet, daß in der Heterostruktur (21, 22) oder der Heterostruktur (21, 22, 23) die erste Schicht (21) eine binäre Epitaxialschicht aus InP des Leitfähigkeitstyps $n^-$, die zweite Schicht eine quaternäre Epitaxialschicht aus GaInAsP und die dritte Schicht (23), sofern sie existiert, eine binäre Epitaxialschicht aus InP des Leitfähigkeitstyps $n^-$ ist, wobei diese Schichtenfolge auf ein massives Substrat aus monokristallinem halbisolierendem Indiumphosphid InP angebracht ist.

24. Verfahren nach einem der Ansprüche 17, 18 oder 23, dadurch gekennzeichnet, daß das Material InP vom Leitfähigkeitstyp $n^-$ allein durch dessen Restdotierung erhalten wird, daß das Material InP des Leitfähigkeitstyps $n^+$ durch Dotierung mit Hilfe von Ionen $S^+$ mit einer Konzentration von $4.10^{18}$ erhalten wird und daß das massive Substrat aus halbisolierendem InP, sofern es existiert, durch Ziehen nach der Czochralski-Methode erhalten wird, und zwar unter Verkapselung in der Größenordnung von $14.10^{16}$, und daß die epitaxialen Schichten durch eine der Methoden MOVPE oder VPE erhalten werden.

25. Verfahren nach einem der Ansprüche 14 bis 24, dadurch gekennzeichnet, daß gilt:

$0,5 \mu m \leq h \leq 0,75 \mu m$   $W_G = 4 \mu m$
$p < 20\%$ von $e_G$   $W_S = 1$ bis $4 \mu m$
$1,5 \mu m \leq e_G \leq 2,5 \mu m$   $2° \leq \alpha \leq 5°$

26. Verfahren nach einem der Ansprüche 14 bis 25, dadurch gekennzeichnet, daß das erste Maskensystem gemäß Schritt b) durch Übereinanderlagerung einer Schicht 31 aus Siliziumoxid und einer Schicht (32) aus Photoresistlack gebildet wird.

27. Verfahren nach Anspruch 26, dadurch gekennzeichnet, daß beim Verfahrensschritt b) die Dicke der Schicht (31) aus Siliziumoxid zwischen 500 und 700 nm liegt, daß die Dicke der Schicht 32 aus Photoresistlack bei etwa 0,7 bis 1 $\mu m$ liegt, daß die Schicht aus Siliziumoxid nach ihrem Aufbringen und vor dem Aufbringen der Schicht aus Photoresistlack bei 420°C während 30 Minuten thermisch behandelt wird, daß die Schicht (32) aus Photoresistlack nach ihrem Aufbringen auf einer Temperatur von etwa 90°C während ungefähr 30 Minuten wärmebehandelt wird, daß das Band R durch ein photolithographisches Verfahren der Schicht (32) aus Photoresistlack begrenzt wird, die so eine Maske $M_2$ bildet, worauf die Schicht (32) aus Photoresistlack in Stufen auf 180°C erwärmt wird, daß dann die Schicht (31) aus Siliziumoxid um die Maske $M_2$ durch reaktives Ionenätzen mit Hilfe des Gases $CHF_3$ abgeätzt wird, bis die obere Oberfläche der oberen Schicht aus Halbleitermaterial zum Vorschein kommt, wodurch unter dr Maske $M_2$ eine Maske $M_1$ gebildet wird.

28. Verfahren nach Anspruch 27, dadurch gekennzeichnet, daß das Band R durch Ätzen der halbleitenden Schichten um das Maskensystem $M_1$, $M_2$ herum und mit Hilfe einer Gasmischung gebildet wird, die mindestens die Gase $CH_4/H_2$ enthält.

29. Verfahren nach einem der Ansprüche 26 bis 28, dadurch gekennzeichnet, daß das zweite Maskensystem gemäß Schritt c) von einer Schicht (33) aus Photoresistlack mit einer Dikke zwischen 2 und 4 $\mu m$ gebildet wird.

30. Verfahren nach Anspruch 29, dadurch gekennzeichnet, daß beim Verfahrensschritt c) die Öffnungen $O_1$, $O_2$ in der Schicht (33) durch einen lithographischen, an sich bekannten Verfahrensschritt angebracht werden, wodurch die Maske $M_3$ gebildet wird, daß dann die Rillen $S_1$, $S_2$ durch Ätzen der in den Öffnungen $O_1$, $O_2$ freiliegenden Halbieiterschichten ausgeätzt werden, bis eine Ätztiefe p in der Schicht $C_G$ erreicht wird, wobei dieses Ätzen mit Hilfe einer Gasmischung erfolgt, die mindestens die Gase $CH_4/H_2$ enthält, und daß die beiden Maskensysteme $M_1$, $M_2$ und $M_3$ durch Auflösen in Azeton, was den Photoresistlack angeht, und durch Auflösen in Fluorwasserstoffsäure (HF) entfernt werden, was das Siliziumoxid angeht.

31. Verfahren nach Anspruch 30, dadurch gekennzeichnet, daß bei der Herstellung der Maske $M_3$ die Öffnungen $O_1$ und $O_2$ so gebildet werden, daß sie oberhalb des Bandes R getrennt sind und das Band noch vom Maskensystem $M_1$, $M_2$ über eine Breite $d < W_G$ bedeckt ist.

32. Verfahren nach Anspruch 30, dadurch gekennzeichnet, daß bei der Herstellung der Maske $M_3$ die Öffnungen $O_1$ und $O_2$ so gebildet werden, daß sie sich oberhalb des Bandes R, das noch mit dem Maskensystem $M_1$, $M_2$ bedeckt ist, berühren, um eine einzige Öffnung zu bilden, die eine Form mit Schwalbenschwänzen an beiden Enden darstellt, die die Enden der Rillen $S_1$ und $S_2$ bilden.

33. Verfahren nach einem der Ansprüche 30 bis 32, dadurch gekennzeichnet, daß die Enden der Öffnungen $O_1$, $O_2$ sich vom Band R in einem Winkel $\alpha$ über eine Länge 1 von ungefähr 50 $\mu m$ entfernen, um die Bildung der Enden $E_{11}$, $E_{12}$, $E_{21}$, $E_{22}$ der Rillen $S_1$ und $S_2$ zu erlauben.

FIG. 1a

FIG. 1b

FIG. 1c

FIG. 2

FIG. 3

FIG. 4

FIG. 5a

FIG. 5b

FIG. 5c

FIG. 6

FIG. 7a

FIG. 7b

FIG. 7c

FIG. 8a

FIG. 8b

FIG.9a

FIG.9b

FIG.9c

FIG.10 a

FIG.10 b

FIG.10 c

FIG. 10 d

FIG. 10 e

FIG. 10 f

FIG.11a

FIG.11b

FIG.11c

FIG. 11 d

FIG. 11 e

FIG. 11 f

FIG. 10g

FIG. 11g

FIG. 10h

FIG. 11h

EP 0 349 038 B1